# EUROPEAN PATENT SPECIFICATION

(11) **EP 4 113 680 B1**
(45) Date of publication and mention of the grant of the patent: **29.10.2025**
(21) Application number: 21822426.9
(22) Date of filing: 09.03.2021
(51) Int. Cl.: H01M 10/04, H01M 4/13, H01M 50/531, H01M 4/74, H01M 50/533, H01M 10/0587, H01M 4/02

(54) **ELECTRODE ASSEMBLY AND SECONDARY BATTERY INCLUDING THE SAME**
ELEKTRODENANORDNUNG UND SEKUNDÄRBATTERIE DAMIT
ENSEMBLE ÉLECTRODE ET BATTERIE SECONDAIRE LE COMPRENANT

(30) Priority: 08.06.2020 KR 20200068992
(43) Date of publication of application: 04.01.2023
(73) Proprietor: LG Energy Solution, Ltd., Seoul 07335 (KR)
(72) Inventor: KO, Yohan, Daejeon 34122 (KR)
(74) Representative: Goddar, Heinz J.
(86) International application number: PCT/KR2021/002913
(87) International publication number: WO 2021/251595

(56) References cited:
- CN-U- 205 303 553
- JP-A- 2006 185 778
- JP-A- 2014 007 108
- JP-A- H07 130 344
- JP-A- H07 130 344
- JP-A- S5 165 331
- KR-A- 20060 015 060
- KR-A- 20170 022 289
- KR-A- 20190 026 627
- KR-B1- 101 810 269

## Description

### BACKGROUND OF THE INVENTION

### (a) Field of the Invention

### [Technical Field]

The present invention relates to an electrode assembly and a secondary battery including the same, and particularly relates to an electrode assembly with a radial structure and a secondary battery including the same.

### [Background Art]

Recently, a demand for portable electronic products such as laptop computers, video cameras, mobile phones, and the like is rapidly increasing, and development on electric vehicles, energy storage batteries, robots, and satellites is active, thus many researches on secondary batteries used as a driving power source therefor have been performed.

The electrode assembly installed in a battery case is a generating element that is configured with a stacked structure including a positive electrode, a separation membrane, and a negative electrode and that may be repeatedly charged and discharged, and it is classified into a jelly-roll type, a stack type, and a stack/folding type. The jelly-roll type is a structure obtained by interposing a separation membrane between long sheet-type positive and negative electrodes coated with an active material and then winding it, and the stack type is a structure in which a plurality of positive and negative electrodes with a predetermined size are sequentially stacked while a separation membrane is interposed therebetween, and the stack/folding type is a mixed structure of the jelly-roll type and the stack type. Among them, the jelly-roll type of electrode assembly has high merits of easy manufacturing and high energy density per unit weight.

The secondary battery is classified into a cylindrical battery in which an electrode assembly is installed in a cylindrical metal can, a square-shaped battery in which an electrode assembly is installed in a square-shaped metal can, and a pouch-type battery in which an electrode assembly is installed in a pouch-type case of an aluminum laminate sheet according to shapes of the battery case. Among them, the cylindrical battery has a merit that it has relatively large capacity and has a stable structure.

The secondary battery includes, for example, a nickel cadmium battery, a nickel hydrogen battery, a nickel zinc battery, and a lithium secondary battery. Among them, compared to the nickel-based secondary battery, the lithium secondary battery scarcely generates a memory effect so it is freely charged and discharged, a self-discharging rate is very low, an operation voltage is high, and an energy density per unit weight is high, which are merits, so it is widely used in the cutting-edge electronic device field.

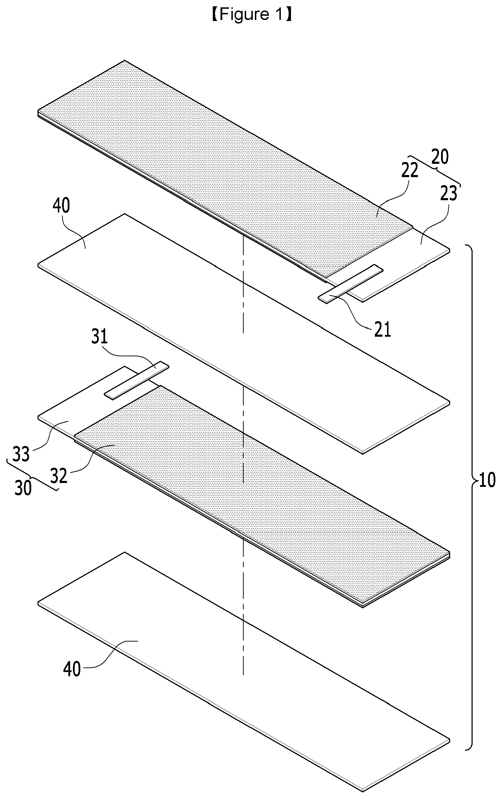

FIG. 1 shows an exploded perspective view of a conventional jelly-roll electrode assembly that is not wound.

Referring to FIG. 1, the conventional jelly-roll electrode assembly 10 inserted into the secondary battery includes a positive electrode sheet 20, a negative electrode sheet 30, and a separation film 40 provided between the positive electrode sheet 20 and the negative electrode sheet 30. When wound in the jelly-roll shape, it is preferable to additionally dispose a separation film 40 below the negative electrode sheet 30 so as to prevent the positive electrode sheet 20 and the negative electrode sheet 30 from being folded on each other.

The positive electrode sheet 20 may include a positive electrode mixture layer 22 formed by applying a positive electrode active material to the positive electrode current collector and a positive electrode uncoated region 23 to which the positive electrode active material is not applied and which exposes the positive electrode current collector. The positive electrode tab 21 may be bonded to the positive electrode uncoated region 23 by a method such as welding.

In a like manner, the negative electrode sheet 30 may include a negative electrode mixture layer 32 formed by applying a negative active material to the negative electrode current collector and a negative uncoated region 33 to which the negative active material is not applied and which exposes the negative electrode current collector. The negative electrode tab 31 may be bonded to the negative uncoated region 33 by a method such as welding.

Here, the positive electrode sheet 20 and the negative electrode sheet 30 generally have a rectangular sheet form to be wound in a jelly-roll shape, so a distance for electrons to move from the positive electrode tab 21 or the negative electrode tab 31 through the positive electrode current collector or the negative electrode current collector increases. When the distance for electrons to move increases as described above, electron transfer resistance substantially increases, which is a drawback, and particularly, the drawback may be intensified in a high-current operation condition.

In another way, in the case of a lithium secondary battery, in general, lithium ions in an electrolyte solution express high ion conductivity within a specific concentration range, and the ion conductivity is reduced when its concentration is less or greater than the same. An electrolyte solution concentration of the lithium secondary battery or a concentration of the lithium ions is not constant, and the concentrations of the lithium ions around the positive electrode and the negative electrode go in opposite directions depending on battery operation conditions.

Therefore, to solve the problem, new methods for the secondary battery are needed.

JP 2014 007 108 A relates to a secondary battery comprisesing an electrolyte; and an electrode member immersed in the electrolyte, wherein the electrode member forms an electrode pair in which a plurality of positive electrodes having a positive electrode active material layer formed on a surface of a positive electrode current collector foil, a negative electrode having a negative electrode active material layer formed on a surface of a negative electrode current collector foil, and separators are stacked between the positive electrode and the negative electrode, and which is composed of the positive electrode active material layer and the negative electrode active material layer opposing each other through separators. Each of electrode pairs has first regions consisting of active material layers having first characteristics of relatively highest output and low capacity, and second regions consisting of active material layers having second characteristics of relatively lowest output and high capacity, and a region between the first region and the second region has an active material layer having characteristics in which output and capacity characteristics changes from the first characteristics to the second characteristics by gradation or step by step.

KR 2017 0 022 289 A discloses an electrode assembly comprising a positive electrode, a negative electrode and a separation membrane interposed between the positive electrode and the negative electrode. The positive electrode and the negative electrode comprise an active material coating unit on one side or both sides of a plate-shape current collector and have an electrode tab, in which an electrode active material is not coated, on one side end of the current collector. At least one electrode of the positive electrode and the negative electrode is in a structure in which a loading amount of the active material coating unit is increased to an electrode tab side.

### [DETAILED DESCRIPTION OF THE INVENTION]

### [Technical Problem]

The present invention has been made in an effort to provide an electrode assembly for reducing transfer resistance and providing structural stability, and a device including the same.

The object of the present invention is not limited to the above-described object, and it may be expanded in various ways in the range of the ideas and the areas of the present invention.

### [Technical Solution]

The present invention provides an electrode assembly (100) including: a plurality of unit cells (100U) for forming a radial structure with reference to a center, wherein a thickness of the unit cell (100U) is reduced while going to the center from an external side of the radial structure with respect to a horizontal cross-section, and an electrode tab (211a, 311a) is formed on at least one of an upper edge, a lower edge, an external edge, and a center edge of a current collector (210), 310) included in the unit cell (100U), characterized in that the unit cell (100U) includes a positive electrode (200), a first separation film (400), a negative electrode (300), and a second separation film (500) that are sequentially stacked, wherein the positive electrode (200) includes a positive electrode current collector (210) and a positive electrode mixture layer (220) formed on the positive electrode current collector (210), and the negative electrode (300) includes a negative electrode current collector (310) and a negative electrode mixture layer (320) formed on the negative electrode current collector (310), wherein a thickness of at least one of the positive electrode mixture layer (220) and the negative electrode mixture layer (320) is reduced when going to the center from the external side of the radial structure, and wherein density of at least one of the positive electrode mixture layer (220) and the negative electrode mixture layer (320) increases when going to the center from the external side of the radial structure.

A positive electrode tab (211a, 211b, 211c) may be formed on at least one of an upper edge, an external edge, and a center edge of the positive electrode current collector (210).

A negative electrode tab (311a, 311b, 311c) may be formed on at least one of a lower edge, an external edge, and a center edge of the negative electrode current collector (310).

The positive electrode current collector (210), the positive electrode mixture layer (220), the first separation film (400), the negative electrode mixture layer (320), the negative electrode current collector (310), and the second separation film (500) may be sequentially stacked.

A through-hole (212, 312) may be formed in the current collector (210, 310).

The electrode assembly may further include an electrode lead (213, 313) bonded to the electrode tab (211a-c, 311a-c).

Another embodiment of the present invention provides a secondary battery including: the electrode assembly (100); a battery case (600) for receiving the electrode assembly (100); and a cap assembly (700) disposed on the electrode assembly (100), wherein the electrode tab (211a, 311a) is connected to the cap assembly (700) or the battery case (600).

### [Advantageous effects]

The embodiments of the present invention propose a plurality of unit cell configurations for forming a radial structure to reduce transfer resistance, and performance of the secondary battery may be increased by reducing the changing width of the concentration of the electrolyte solution in the secondary battery by applying the through-hole formed current collector.

In addition, the structural stability of the assembly may be increased according to the electrode tab structure formed at one edge of the current collector, and the increase of weight may be minimized.

The effects of the present invention are not limited to the effects mentioned above, and other effects not mentioned can be clearly understood by those skilled in the art from the description of the claims.

### [Description of the Drawings]

FIG. 1 shows an exploded perspective view of a conventional jelly-roll electrode assembly that is not wound.
FIG. 2 shows a perspective view of an electrode assembly according to an embodiment of the present invention.
FIG. 3 shows a partial cross-sectional view of part of a cross-section with respect to A-A' of FIG. 2.
FIG. 4 shows a partial cross-sectional view of part of a cross-section with respect to B-B' of FIG. 2.
FIG. 5 (a) to FIG. 5 (c) show a positive electrode current collector and a positive electrode tab according to various embodiments of the present invention.
FIG. 6 (a) to FIG. 6 (c) show a negative electrode current collector and a negative electrode tab according to various embodiments of the present invention.
FIG. 7 (a) to FIG. 7 (c) show a bonded structure of a positive electrode tab and a positive electrode lead according to modified embodiments of the present invention.
FIG. 8 (a) to FIG. 8 (c) show a bonded structure of a negative electrode tab and a negative electrode lead according to modified embodiments of the present invention.
FIG. 9 shows an exploded perspective view of a secondary battery according to an embodiment of the present invention.
FIG. 10 and FIG. 11 show graphs of results of comparison and estimation on changes of voltages and temperatures when a secondary battery is charged and discharged according to an embodiment of the present invention.

### [Detailed Description of the Embodiments]

The present invention will be described more fully hereinafter with reference to the accompanying drawings, in which exemplary embodiments of the invention are shown.

Parts that are irrelevant to the description will be omitted to clearly describe the present invention, and the same elements will be designated by the same reference numerals throughout the specification.

The size and thickness of each configuration shown in the drawings are arbitrarily shown for better understanding and ease of description, but the present invention is not limited thereto. In the drawings, the thickness of layers, films, panels, regions, etc., are enlarged for clarity. The thicknesses of some layers and areas are exaggerated for convenience of explanation.

It will be understood that when an element such as a layer, film, region, or substrate is referred to as being "on" another element, it can be directly on the other element or intervening elements may also be present. In contrast, when an element is referred to as being "directly on" another element, there are no intervening elements present. The word "on" or "above" means positioned on or below the object portion, and does not necessarily mean positioned on the upper side of the object portion based on a gravitational direction.

Unless explicitly described to the contrary, the word "comprise" and variations such as "comprises" or "comprising" will be understood to imply the inclusion of stated elements but not the exclusion of any other elements.

The phrase "in a plan view" means viewing an object portion from the top, and the phrase "in a cross-sectional view" means viewing a cross-section of which the object portion is vertically cut from the side.

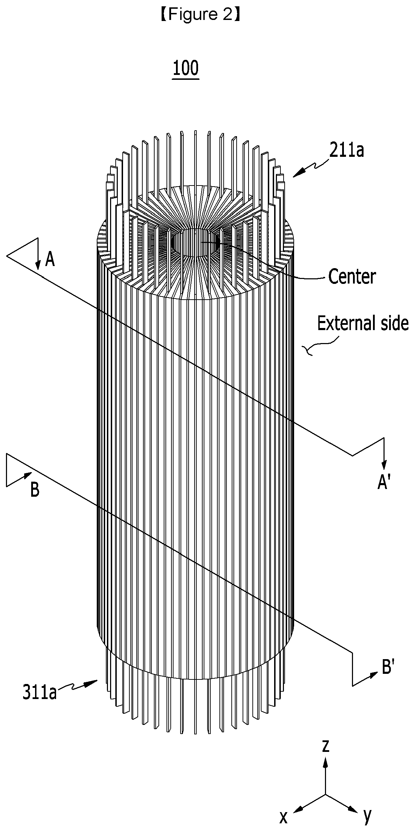

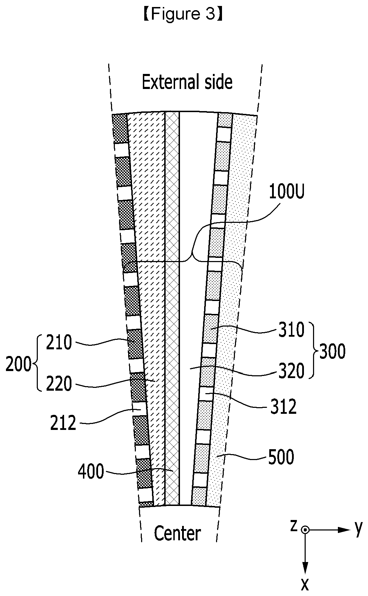

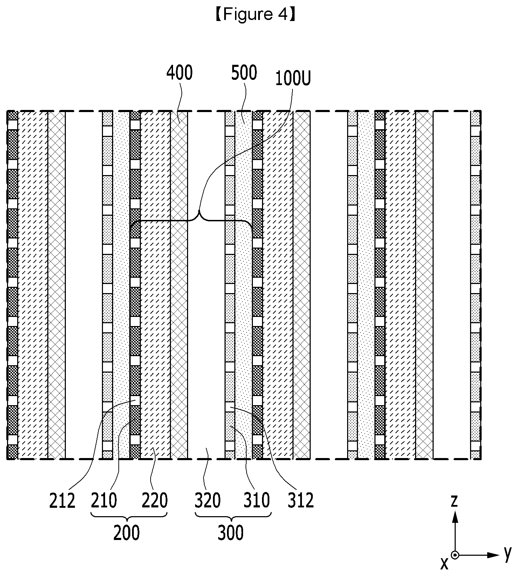

FIG. 2 shows a perspective view of an electrode assembly according to an embodiment of the present invention. FIG. 3 shows a partial cross-sectional view of part of a cross-section with respect to A-A' of FIG. 2. FIG. 4 shows a partial cross-sectional view of part of a cross-section with respect to B-B' of FIG. 2. In detail, the cross-section diagram of FIG. 3 with respect to a line A-A' corresponds to the cross-section of the electrode assembly of FIG. 2 cut in a horizontal direction, and the cross-section diagram of FIG. 4 with respect to a line B-B' corresponds to the cross-section of the electrode assembly of FIG. 2 cut in a vertical direction.

Referring to FIG. 2 to FIG. 4, the electrode assembly 100 according to an embodiment of the present invention includes a plurality of unit cells 100U for forming a radial structure with respect to a center. A thickness of the unit cell 100U is reduced as the direction goes to the center from an external side of the radial structure with respect to a horizontal cross-section, and electrode tabs 211a and 311a are formed on at least one of an upper edge, a lower edge, an external edge, and a center edge of current collectors 210 and 310 included in the unit cell 100U. Here, the horizontal cross-section signifies a cross-section of the electrode assembly 100 with respect to an xy-plane as shown in FIG. 2, and it corresponds to the cross-section with respect to the line A-A'.

The electrode assembly 100 according to the present embodiment may have a cylindrical shape, the center signifies an internal center region of the electrode assembly 100 with respect to the horizontal cross-section, and the external side signifies an external region of an external circumferential surface of the electrode assembly 100 with respect to the horizontal cross-section. A hollow space passing through in the vertical direction (or a z-axis direction) may be formed in the center of the electrode assembly 100.

As described above, the unit cell 100U according to the present embodiment forms a radial structure, and the thickness of the unit cell 100U is reduced as the direction goes to the center from the external side of the radial structure with respect to the horizontal cross-section. A plurality of unit cells 100U may configure the cylindrical electrode assembly 100. In detail, n-numbered (n is an integer that is equal to or greater than 5) unit cells 100U may be gathered together to form an electrode assembly 100, and the external circumferential surface of the electrode assembly 100 may have a circular shape, a shape that is close to the circular shape with respect to the horizontal cross-section, an n-polygonal shape, or a fan shape. In other words, the horizontal cross-section shape of the electrode assembly 100 may be determined by the number of the unit cells 100U, and when the number is small, it may be an n-polygon, and when the number is large, it may form a circle. For example, when the cross-sectional shape of the electrode assembly 100 is an n-polygon, and the number n is equal to or greater than 5 or is equal to or greater than 10, it may be considered to belong to the category of circles.

The current collectors 210 and 310 according to the present embodiment may includes a positive electrode current collector 210 and a negative electrode current collector 310, and the electrode tabs 211a and 311a may include a positive electrode tab 211a and a negative electrode tab 311a. In detail, the unit cell 100U according to the present embodiment includes a positive electrode 200, a first separation film 400, a negative electrode 300, and a second separation film 500 that are sequentially stacked.

The positive electrode 200 includes a positive electrode current collector 210 and a positive electrode mixture layer 220 formed on the positive electrode current collector 210. The positive electrode mixture layer 220 may be formed by applying a positive electrode active material to the positive electrode current collector 210.

The negative electrode 300 includes a negative electrode current collector 310 and a negative electrode mixture layer 320 formed on the negative electrode current collector 310. The negative electrode mixture layer 320 may be formed by applying a negative active material to the negative electrode current collector 310.

Referring to FIG. 3, the thickness of at least one of the positive electrode mixture layer 220 and the negative electrode mixture layer 320 is reduced as the direction goes to the center from the external side of the radial structure. Particularly, it is preferable for the thicknesses of the positive electrode mixture layer 220 and the negative electrode mixture layer 320 to be reduced as the direction goes to the center from the external side of the radial structure.

That is, according to the present embodiment, an alignment of thickness may be provided to the unit cell 100U and the radial structure may be formed by designing the thicknesses of the mixture layers 220 and 320 loaded on the current collectors 210 and 310 to be reduced as the direction goes to the center from the external side of the radial structure.

As the direction goes to the center from the external side of the radial structure, density of at least one of the positive electrode mixture layer 220 and the negative electrode mixture layer 320 is increased. Particularly, it is desirable for the density of the positive electrode mixture layer 220 and the negative electrode mixture layer 320 to increase as the direction goes to the center from the external side of the radial structure.

As described above, according to the present embodiment, non-uniformity of capacity may be generated according to positions or directions of the unit cell 100U when the thickness of the mixture layers 220 and 320 loaded on the current collectors 210 and 310 are designed to be reduced as the direction goes to the center from the external side of the radial structure. In the present embodiment, the non-uniformity of capacity caused by the alignment of thickness of the unit cell 100U may be compensated by designing the density of the mixture layers 220 and 320 loaded on the current collectors 210 and 310 to be increased as the direction goes to the center from the external side of the radial structure. For example, a region in which the thicknesses of the mixture layers 220 and 320 loaded on the current collectors 210 and 310 are less may set the density of the mixture layers 220 and 320 to be high. The alignment of density of the mixture layers 220 and 320 may be realized by applying or reducing pressures in one direction when the pressures are applied by use of a roller while the mixture layers 220 and 320 are uniformly loaded on the current collectors 210 and 310.

Regarding the unit cell 100U, a positive electrode current collector 210, a positive electrode mixture layer 220, a first separation film 400, a negative electrode mixture layer 320, a negative electrode current collector 310, and a second separation film 500 may be sequentially stacked. Accordingly, when multiple unit cells 100U are gathered together to configure an electrode assembly 100, a second separation film 500 of one unit cell 100U may face the positive electrode current collector 210 of another adjacent unit cell 100U. That is, regarding the electrode assembly 100 according to the present embodiment, the first separation film 400 may be positioned between the positive electrode mixture layer 220 and the negative electrode mixture layer 320, and the second separation film 500 may be positioned between the positive electrode current collector 210 and the negative electrode current collector 310.

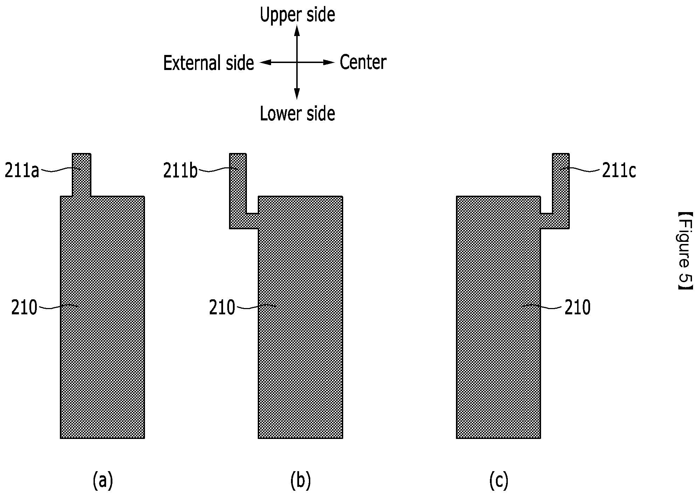

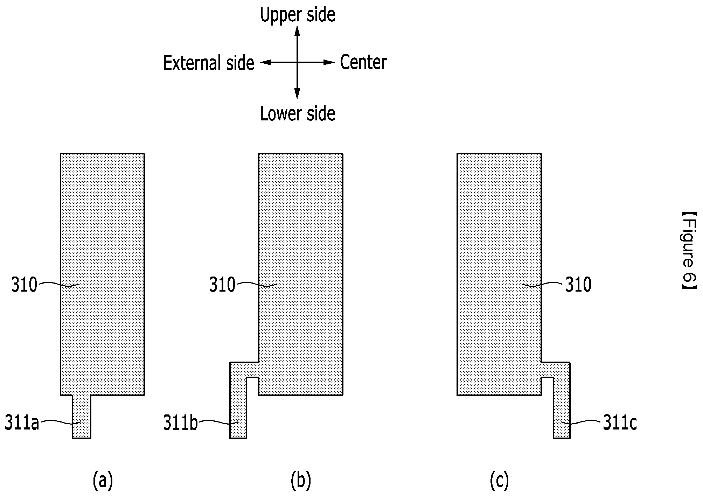

As described above, an electrode tab is formed on at least one of the upper edge, the lower edge, the external edge, and the center edge of the current collectors 210 and 310 included in the unit cell 100U, and the positive electrode tab and the negative electrode tab will now be individually described with reference to FIG. 5 (a) to FIG. 5 (c) and FIG. 6 (a) to FIG. 6 (c).

FIG. 5 (a) to FIG. 5 (c) show a positive electrode current collector and a positive electrode tab according to various embodiments of the present invention, and FIG. 6 (a) to FIG. 6 (c) show a negative electrode current collector and a negative electrode tab according to various embodiments of the present invention.

Referring to FIG. 5 (a) to FIG. 5 (c), positive electrode tabs 211a, 211b, and 211c may be formed on at least one of the upper edge, the external edge, and the center edge of the positive electrode current collector 210. **In** detail, FIG. 5 (a) shows the positive electrode tab 211a formed at the upper edge of the positive electrode current collector 210, FIG. 5 (b) shows the positive electrode tab 211b formed at the external edge of the positive electrode current collector 210, and FIG. 5 (c) shows the positive electrode tab 211c formed at the center edge of the positive electrode current collector 210. Here, the upper edge represents the edge positioned in the z-axis direction in FIG. 2, the external edge indicates the edge positioned on the external side of the electrode assembly 100 in FIG. 2, and the center edge is the edge positioned at the center of the electrode assembly 100 in FIG. 2.

The respective positive electrode tabs 211a, 211b, and 211c may extend upward. The positive electrode tab 211a formed at the upper edge may extend upward in a straight line, and the positive electrode tabs 211b and 211c formed at the external edge or the center edge may be bent and may extend upward.

Referring to FIG. 6 (a) to FIG. 6 (c), negative electrode tabs 311a, 311b, and 311c may be formed on at least one of the lower edge, the external edge, and the center edge of the negative electrode current collector 310. In detail, FIG. 6 (a) shows the negative electrode tab 311a formed at the lower edge of the negative electrode current collector 310, FIG. 6 (b) shows the negative electrode tab 311b formed at the external edge of the negative electrode current collector 310, and FIG. 6 (c) shows the negative electrode tab 311c formed at the center edge of the negative electrode current collector 310. The lower edge is the edge positioned in a -z-axis direction in FIG. 2, the external edge represents the edge positioned on the external side of the electrode assembly 100 in FIG. 2, and the center edge indicates the edge positioned at the center of the electrode assembly 100 in FIG. 2.

The respective negative electrode tabs 311a, 311b, and 311c may extend downward. The negative electrode tab 311a formed at the lower edge may extend downward in a straight line, and the negative electrode tabs 311b and 311c formed at the external edge or the center edge may be bent and may extend downward.

The positive electrode tabs 211a, 211b, and 211c may be configured into a single body with the positive electrode current collector 210. That is, part of the positive electrode current collector 210 in a plate shape may protrude to form the positive electrode tabs 211a, 211b, and 211c. In a like way, the negative electrode tabs 311a, 311b, and 311c may be configured into a single body with the negative electrode current collector 310. That is, part of the negative electrode current collector 310 in a plate shape may protrude to form the negative electrode tabs 311a, 311b, and 311c.

The electrode assembly 100 according to the present embodiment may be configured by combining one of the positive electrode tabs 211a, 211b, and 211c and one of the negative electrode tabs 311a, 311b, and 311c. In detail, for example, the positive electrode tab 211a formed at the upper edge may be combined to the negative electrode tab 311a formed at the lower edge, the positive electrode tab 211b formed at the external edge may be combined to the negative electrode tab 311b formed at the external edge, and the positive electrode tab 211c formed at the center edge may be combined to the negative electrode tab 311c formed at the center edge. The positive electrode tab 211b formed at the external edge may be combined to the negative electrode tab 311c formed at the center edge. There is no specific limit to the respective combinations, and various types of combinations are possible.

For example, the electrode assembly 100 described with reference to FIG. 2 may represent a shape in which the positive electrode tabs 211a are formed at the upper edge of the positive electrode current collector, and the negative electrode tabs 311a are formed at the lower edge of the negative electrode current collector.

Differing from what is illustrated, as one of the present embodiments, the positive electrode tab may be formed at the lower edge and may extend downward, and the negative electrode tab may be formed at the upper edge and may extend upward.

Regarding the conventional jelly-roll electrode assembly 10 shown in FIG. 1, the positive electrode sheet 20 and the negative electrode sheet 30 are configured to be a rectangular sheet for winding, so the distance for the electrons to travel through the positive electrode current collector or the negative electrode current collector increases, and electron transfer resistance increases. For example, in the case of the conventional jelly-roll electrode assembly 10, the positive electrode or negative electrode current collector may have the thickness of several to several tens of micrometers and may have the length of several hundreds of millimeters to 1 meter. When the electrode tab is positioned at the center of the current collector, the electrons have to move half the length of the current collector, that is, several hundreds of millimeters.

On the other hand, the electrode assembly 100 according to the present embodiment superficially forms a cylindrical configuration, which is similar to the conventional jelly-roll electrode assembly 10, and it includes a plurality of unit cells 100U forming a radial structure, and the above-described positive electrode tabs 211a, 211b, and 211c and the negative electrode tabs 311a, 311b, and 311c may be formed for the respective unit cells 100U. That is, the electrode assembly 100 forms a new configuration, thereby reducing the distance for the electrons to travel through the positive electrode current collector 210 or the negative electrode current collector 310. For example, in the case of the electrode assembly according to the present embodiment, the positive electrode or negative electrode current collector may have the thickness of several micrometers and the length of about 60 millimeters. A path for the electrons to travel may be further reduced when the electrode assembly with a similar size and shape is formed in comparison to the conventional jelly-roll electrode assembly 10. Therefore, the electrode assembly 100 may solve the problem of the increase of electron transfer resistance of the conventional jelly-roll electrode assembly 10.

Referring to FIG. 3 and FIG. 4, through-holes 212 and 312 may be formed in the current collectors 210 and 310 according to an embodiment of the present invention, and the through-holes 212 and 312 may be formed in a thickness direction of the current collectors 210 and 310. In detail, ions are generally transmitted between the positive electrode mixture layer 220 and the negative electrode mixture layer 320 with the first separation film 400 therebetween. As described above, the second separation film 500 is positioned between the positive electrode current collector 210 and the negative electrode current collector 310, the through-holes 212 and 312 are respectively formed in the positive electrode current collector 210 and the negative electrode current collector 310, so the positive electrode mixture layer 220 and the negative electrode mixture layer 320 may contact the second separation film 500 through the through-holes 212 and 312. Therefore, the ions may be transmitted between the positive electrode mixture layer 220 and the negative electrode mixture layer 320 with the second separation film 500 therebetween. That is, when the secondary battery is charged and discharged, the transmission of ions may be performed in a bidirectional way because of the second separation film 500 and the porous current collectors 210 and 310 in which the through-holes 212 and 312 are formed, so performance of the secondary battery may be improved.

By applying the current collectors 210 and 310 in which the through-holes 212 and 312 are formed to the unit cell 100U, degrees of changing concentration of an electrolyte solution or lithium ions in the secondary battery may be reduced and performance of the battery may be improved. By applying the current collectors 210 and 310 in which the through-holes 212 and 312 are formed in the thickness direction to the unit cell 100U, the concentration of lithium ions in the electrolyte solution may be maintained within a predetermined range. By this, an overvoltage factor relating to the electrolyte solution from among the overvoltage factors of the secondary battery may be reduced, thereby increasing the battery performance.

According to an embodiment of the present invention, an area fraction for forming the through-holes 212 and 312 may be within the range of 10 % to 80 %. In detail, the area fraction of the formed through-holes 212 and 312 may be in the range of 10 % to 80 %, 10 % to 70 %, 10 % to 50 %, 20 % to 90 %, 30 % to 90 %, or 30 % to 60 %. The area fraction of the formed through-holes 212 and 312 may represent a ratio of the area of the through-holes 212 and 312 to the area of the current collectors 210 and 310.

According to an embodiment of the present invention, 10 to 500 through-holes 212 and 312 may be formed per unit area of 10 cm x 10 cm. In detail, 10 to 300, 10 to 200, 10 to 100, 10 to 70, 30 to 50, 50 to 500, 100 to 200, 50 to 300, 100 to 500, 30 to 200, or 10 to 200 through-holes 212 and 312 may be formed per the unit area. For example, the current collectors 210 and 310 may have a mesh form.

By controlling the number of the through-holes 212 and 312 per unit area or the area fraction thereof within the range, a changing degree of the current collector may be reduced without much deterioration of mechanical strength, and the changing degree of the an electrolyte solution concentration to a lithium ion concentration in the secondary battery may be reduced.

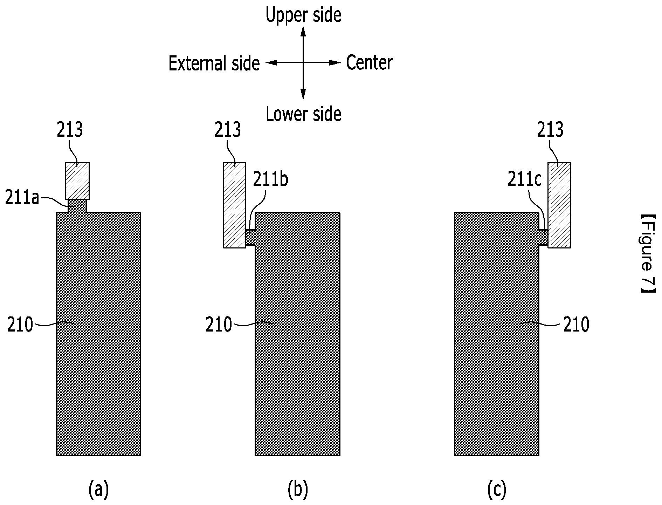

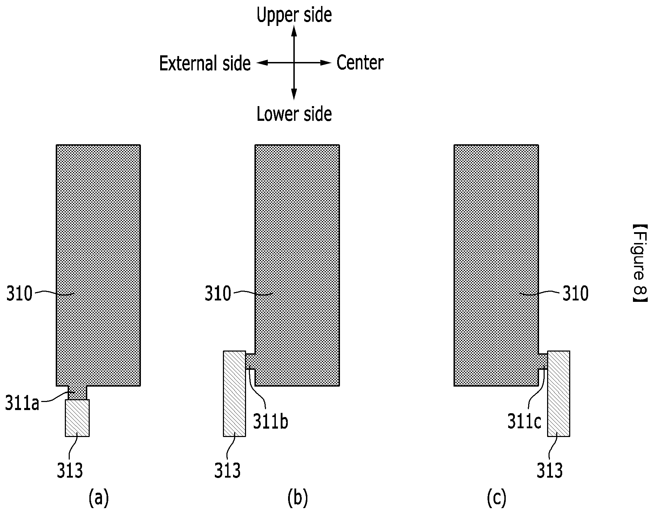

An electrode lead bonded to an electrode tab according to a modified embodiment of the present invention will now be described with reference to FIG. 7 and FIG. 8.

FIG. 7 (a) to FIG. 7 (c) show a bonded structure of a positive electrode tab and a positive electrode lead according to modified embodiments of the present invention, and FIG. 8 (a) to FIG. 8 (c) show a bonded structure of a negative electrode tab and a negative electrode lead according to modified embodiments of the present invention.

Referring to FIG. 7 (a) to FIG. 7 (c), positive electrode tabs 211a, 211b, and 211c may be formed on at least one of the upper edge, the external edge, and the center edge of the positive electrode current collector 210. In detail, FIG. 7 (a) shows the positive electrode tab 211a formed at the upper edge of the positive electrode current collector 210, FIG. 7 (b) shows the positive electrode tab 211b formed at the external edge of the positive electrode current collector 210, and FIG. 7 (c) shows the positive electrode tab 211c formed at the center edge of the positive electrode current collector 210. Positive electrode leads 213 may be bonded to the respective positive electrode tabs 211a, 211b, and 211c. The respective positive electrode lead 213 may extend upward.

Referring to FIG. 8 (a) to FIG. 8 (c), negative electrode tabs 311a, 311b, and 311c may be formed on at least one of the lower edge, the external edge, and the center edge of the negative electrode current collector 310. In detail, FIG. 8 (a) shows the negative electrode tab 311a formed at the lower edge of the negative electrode current collector 310, FIG. 8 (b) shows the negative electrode tab 311b formed at the external edge of the negative electrode current collector 310, and FIG. 8 (c) shows the negative electrode tab 311c formed at the center edge of the negative electrode current collector 310. Negative electrode leads 313 may be bonded to the respective negative electrode tabs 311a, 311b, and 311c. The respective negative electrode leads 313 may extend downward.

The electrode assembly according to the present embodiment may be configured with a combination of one of the bonded structures of the above-described positive electrode tabs 211a, 211b, and 211c and the positive electrode lead 213 and one of the bonded structures of the negative electrode tabs 311a, 311b, and 311c and the negative electrode lead 313.

As one embodiment, the positive electrode lead 213 bonded to the positive electrode tab 211a formed at the upper edge may be combined to the negative electrode lead 313 bonded to the negative electrode tab 311a formed at the lower edge. The above-configured electrode assembly has a merit that its manufacturing process is comparatively simple as the positive electrode lead 213 and the negative electrode lead 313 are respectively positioned on an upper side and a lower side of the electrode assembly 100.

As another embodiment, the positive electrode lead 213 bonded to the positive electrode tab 211b formed at the external edge may be combined to the negative electrode lead 313 bonded to the negative electrode tab 311c formed at the center edge. The positive electrode lead 213 bonded to the positive electrode tab 211c formed at the center edge may be combined to the negative electrode lead 313 bonded to the negative electrode tab 311b formed at the external edge. The above-configured electrode assemblies have a merit that structural stability on the transformation of the electrode is acquired as the electrode leads 213 and 313 hold the electrode assembly on the external side and at the center.

As another embodiment, the positive electrode lead 213 bonded to the positive electrode tab 211b formed at the external edge may be combined to the negative electrode lead 313 bonded to the negative electrode tab 311b formed at the external edge. The above-configured electrode assembly has a merit that structural stability on the transformation of the electrode, particularly, expansion in the external direction is obtained as the electrode leads 213 and 313 hold the electrode assembly on the external side.

For another example, the positive electrode lead 213 bonded to the positive electrode tab 211c formed at the center edge may be combined to the negative electrode lead 313 bonded to the negative electrode tab 311c formed at the center edge. The above-configured electrode assembly has a merit of minimizing an additional increase of weight.

There is no specific limit in bonding the positive electrode tabs 211a, 211b, and 211c and the positive electrode lead 213 or bonding the negative electrode tabs 311a, 311b, and 311c and the negative electrode lead 313, and for example, welding bonding may be performed.

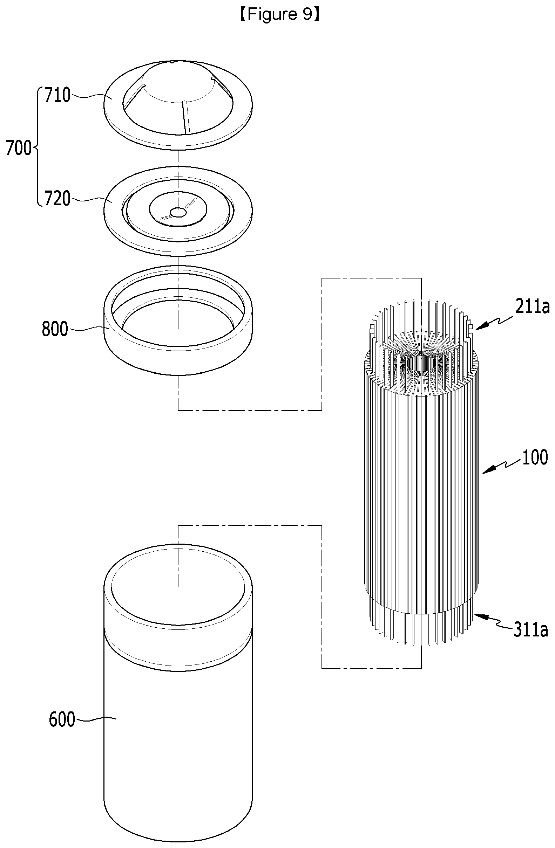

FIG. 9 shows an exploded perspective view of a secondary battery according to an embodiment of the present invention.

Referring to FIG. 9, the secondary battery includes an electrode assembly 100 including unit cells forming a radial structure with reference to the center, a battery case 600 for receiving the electrode assembly 100, and a cap assembly 700 positioned on the electrode assembly 100.

The battery case 600 receives the electrode assembly 100 in which an electrolyte solution is impregnated, and it may have a cylindrical shape.

The cap assembly 700 may include an upper cap 710 and a safety vent 720. The upper cap 710 is positioned on the safety vent 720, and it may be electrically connected to the safety vent 720 as the same is closely attached to the safety vent 720. The center of the upper cap 710 protrudes upward and the upper cap 710 is indirectly connected to the positive electrode 200 of the electrode assembly 100 through the positive electrode tab 211a, so it may function as a positive electrode terminal by a connection to an external circuit.

A gasket 800 for a sealing may be positioned between the battery case 600 and the cap assembly 700. In detail, the gasket 800 may be positioned between the battery case 600 and the cap assembly 700, and an end of the battery case 600 is bent, thereby forming a crimping portion. By this, the cap assembly 700 may be mounted and the secondary battery may be sealed.

The electrode tabs 211a and 311a may be directly connected to the cap assembly 700 or the battery case 600. In detail, the positive electrode tab 211a extending upward may be connected to the cap assembly 700 so the upper cap 710 of the cap assembly 700 may function as a positive electrode terminal. The negative electrode tab 311a extending downward may be connected to the bottom portion of the battery case 600 so the bottom portion of the battery case 600 may function as a negative terminal. The respective electrode tabs 211a and 311a may be connected to the cap assembly 700 or the battery case 600, and in another way, the electrode tabs 211a and 311a may be bonded to each other and may be connected to the cap assembly 700 or the battery case 600.

Although not shown, as a modified embodiment of the present invention, the electrode tab may be bonded to the electrode lead and may be connected to the cap assembly 700 or the battery case 600. In detail, the positive electrode lead bonded to the positive electrode tab and extending upward may be connected to the cap assembly 700 and the upper cap 710 of the cap assembly 700 may function as a positive electrode terminal. The negative electrode lead bonded to the negative electrode tab and extending downward may be connected to the bottom portion of the battery case 600 and the bottom portion of the battery case 600 may function as a negative terminal. The respective electrode leads may be connected to the cap assembly 700 or the battery case 600, and in another way, the electrode leads may be bonded to each other and may be connected to the cap assembly 700 or the battery case 600.

Referring to FIG. 2, with respect to the horizontal cross-section, a hollow space penetrating in a vertical direction (or a z-axis direction) may be formed at the center of the electrode assembly 100, and a diameter ratio of the interior diameter to the exterior diameter may be in the range of 1:1.1 to 100. The diameter ratio of the interior diameter to the exterior diameter of the electrode assembly 100 is calculated according to a mean value of the interior diameter and the exterior diameter. In the detailed embodiment, the diameter ratio of the interior diameter to the exterior diameter of the electrode assembly 100 may be in the range of 1:1.1 to 100, 1:1.5 to 80, 1:2 to 50, 1:10 to 100, or 1:30 to 100.

With respect to the horizontal cross-section, regarding the unit cell 100U, a ratio (Dout:Din) of the thickness (Din) of an internal end forming an interior circumference in the center direction to the thickness (Dout) of an external end forming an external circumferential surface may be in the range of 1:1.5 to 10. In the detailed embodiment, the ratio (Dout:Din) may be in the range of 1:1.1 to 100, 1:1.5 to 80, 1:2 to 50, 1:10 to 100, or 1:30 to 100.

As described above, the unit cell 100U has a radial structure of which the thickness is reduced as it goes in one direction. This shape is different from the square batteries, pouch-type batteries, or cylindrical batteries. The existing secondary batteries have different external shapes, and the unit cells configuring the battery are manufactured to have a uniform total thickness while have a stacked form or a wound form. On the contrary, regarding the unit cell 100U, with respect to the horizontal cross-section, a gap between the electrodes 200 and 300 is reduced while going to the center from the external side of the radial structure.

The positive electrode active material may include a lithium-containing oxide. A lithium-containing transition metal oxide may be used as the lithium-containing oxide. In one example, the positive electrode mixture layer 220 may include a conductive material and a binder polymer in addition to the positive electrode active material, and when needed, it may further include a positive electrode additive generally used by a person skilled in the art.

The positive electrode current collector 210 is a metal with high conductivity, and has no specific limit in the material which is a metal to which a positive electrode active material slurry may be easily attached and which has no reactivity in the voltage range of the secondary battery. In detail, the positive electrode current collector 210 may be a foil manufactured by aluminum, nickel, or a combination thereof.

When a carbon material is used as the negative active material, low crystalline carbon and high crystalline carbon may be used. Soft carbon and hard carbon are representative of the low crystalline carbon. The high crystalline carbon includes high-temperature baked carbon such as natural graphite, kish graphite, pyrolytic carbon, mesophase pitch based carbon fiber, mesocarbon microbeads, mesophase pitches, or petroleum or coal tar pitch derived cokes.

The negative electrode current collector 310 may be a foil manufactured by using copper, gold, nickel, a copper alloy, or a combination thereof. The negative electrode current collector 310 may stack substances made of the materials and may use the same.

The first separation film 400 and the second separation film 500 may use porous substances used by the lithium secondary battery, and for example, they may use a polyolefin-based porous membrane or non-woven fabrics, but are not specifically limited thereto. Examples of the polyolefin based porous membrane include membranes made of each of polyethylenes such as high-density polyethylene, linear low-density polyethylene, low-density polyethylene, very-high molecular weight polyethylene, and polyolefin-based polymers such as polypropylene, polybutylene, or polypentene, or mixed polymers thereof.

An electrode assembly according to another embodiment of the present invention may be applied to solid-state batteries. Although not shown in detail, a solid electrolyte layer may be positioned between the positive electrode and the negative electrode, instead of the separation film. That is, instead of the first separation film and the second separation film, the solid electrolyte layer filled with a solid electrolyte is disposed at the corresponding position, so the electrode assembly for the solid-state battery may be formed.

According to an embodiment of the present invention, the electrolyte solution may use a nonaqueous electrolyte including a non-aqueous electrolyte. As the non-aqueous electrolyte, for example, a non-protogenic organic solvent, such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate trimester, trimethoxy methane, dioxolane derivatives, sulfolane, methyl sulfolane, 1,3-dimethyl-2-imidazolidinone, polypropylene carbonate derivatives, tetrahydrofuran derivatives, ether, methyl propionate, and ethyl propionate may be used. Without being specifically limited thereto, a plurality of electrolyte solution components used to the lithium secondary battery field may be increased or reduced within an appropriate range.

An electrode assembly according to an embodiment will now be described in detail.

### Embodiment 1

100 parts by weight of NCM (LiNi_{0.8}Co_{0.1}Mn_{0.1}O₂) as a positive electrode active material, 1.5 parts by weight of carbon black (FX35, Denka) as a conductive material, and 2.3 parts by weight of polyvinylidene fluoride (KF9700, Kureha) as a binder polymer are added to a solvent of NMP (N-methyl-2-pyrrolidone) to manufacture a positive electrode mixture layer slurry. The slurry of the positive electrode mixture layer is coated on one side of the aluminum current collector in which a through-hole with a loading amount of 640 mg/25 cm² is formed, and is vacuum-dried to obtain a positive electrode. Regarding the aluminum current collector, the through-hole is formed with the area fraction of about 40 %, and about fifty through-holes are formed per unit area of 10 cm x 10 cm. The positive electrode mixture layer is pressurized to be sequentially reduced up to the thickness level of about 40% in one direction.

100 parts by weight of synthetic graphite (GT, Zichen (China)) as a negative active material, 1.1 parts by weight of carbon black (Super-P) as a conductive material, 2.2 parts by weight of styrene-butadiene rubber, and 0.7 parts by weight of carboxymethyl cellulose are added to water that is a solvent to manufacture s negative active material slurry, and the slurry is coated on one side of a copper current collector in which the through-hole is formed, and it is dried and then compressed to thus manufacture the negative electrode. Regarding the copper current collector, the through-hole is formed with the area fraction of about 40 %, and about fifty through-holes are formed per unit area of 10 cm x 10 cm. The positive electrode mixture layer is pressurized so as to be sequentially reduced up to the thickness level of about 40 % in one direction.

A separation film with a melting point of 165 °C and a width of one side of 200 mm, having a microporous structure by uniaxially elongating the polypropylene by use of a drying method, is used. The electrode assembly is manufactured by repeatedly setting unit cells in which the first separation film is provided between the positive electrode and the negative electrode and the second separation film is positioned outside the positive electrode and the negative electrode. The electrode assembly has a structure in which fifty unit cells are set in a radial form with respect to the center with reference to the horizontal cross-section.

The electrode assembly is installed in the cylindrical battery case, and an electrolyte solution of a 1M LiPF6 carbonate-based solution is injected to complete the secondary battery.

### Embodiment 2

The secondary battery is manufactured with the same method as Embodiment 1 except that the aluminum and copper current collectors use the current collector with a mesh structure.

### Comparative Example 1

The positive electrode and the negative electrode are manufactured with the same method as Embodiment 1 except that no thickness through-holes are respectively formed in the positive electrode and negative electrode current collectors and no thickness gradients of the positive electrode and negative electrode mixture layers are formed.

### Experimental Example 1: Estimation on Physical properties of secondary batteries

Physical properties on the secondary batteries manufactured according to the embodiment 1 and Comparative Example 1 are estimated. In detail, the respective secondary batteries are charged and discharged, and changes of voltages and temperatures are respectively measured during the charging and discharging. The secondary batteries are charged and discharged in a condition of 20 °C and 1C.

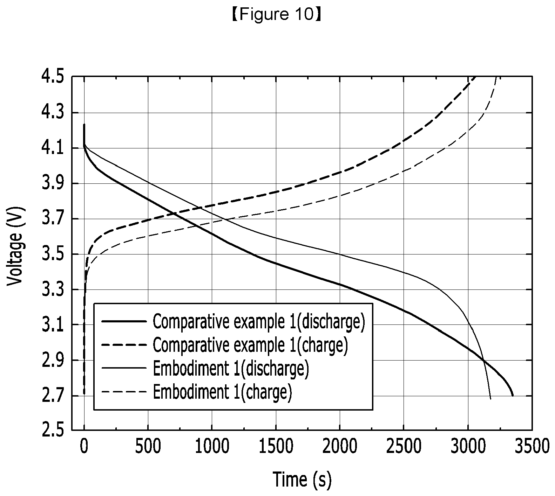

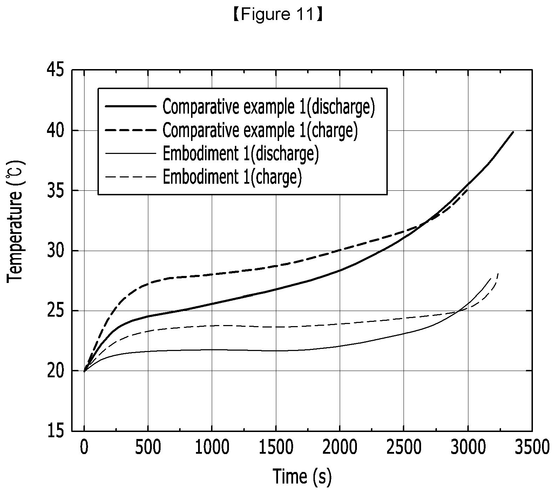

FIG. 10 shows results of estimation on the change of voltages when the secondary battery is charged and discharged, and FIG. 11 shows results of estimation on the change of temperatures when the secondary battery is charged and discharged.

Referring to FIG. 10, it is found that the secondary battery according to Embodiment 1 has higher discharging voltages and lower charging voltages compared to Comparative Example 1. By this, it is found that the secondary battery according to Embodiment 1 provides higher power when applied to products and requires less charging power when charged.

Referring to FIG. 11, it is found that the secondary battery according to Embodiment 1 has a low temperature when charged and discharged and has a very small changing width thereof when compared to Comparative Example 1. Therefore, the secondary battery according to Embodiment 1 may require lower cooling performance and may be designed in a further compact way.

It may be applied to various mobile devices and wearable devices, and particularly it is appropriate for small devices such as hearables or smartwatches and particularly for devices that are limited by the weight and volume of the secondary battery and need long-time use.

It may also be used for power tools that have excellent outputs and are operable by receiving electric power from a battery-based motor, and it is appropriate to be used for electrical vehicles including a drone, an electric vehicle (EV), a hybrid electric vehicle (HEV), and a plug-in hybrid electric vehicle (PHEV), electric two-wheelers including an e-bike and an e-scooter, transportation means using high-power electricity such as an electric golf cart, and an electricity storage system.

In the present embodiment, terms representing directions such as before, after, right, left, top, and bottom have been used, but they are for ease of description, and are variable depending on a position of a target material or a position of an observer.

### <Description of symbols>

100: electrode assembly
100U: unit cell
200: positive electrode
210: positive electrode current collector
211a, 211b, 211c: positive electrode tab
300: negative electrode
310: negative electrode current collector
311a, 311b, 311c: negative electrode tab

## Claims

1. An electrode assembly (100) comprising
a plurality of unit cells (100U) for forming a radial structure with reference to a center,
wherein a thickness of the unit cell (100U) is reduced while going to the center from an external side of the radial structure with respect to a horizontal cross-section, and
an electrode tab (211a, 311a) is formed on at least one of an upper edge, a lower edge, an external edge, and a center edge of a current collector (210, 310) included in the unit cell (100U),
**characterized in that**
the unit cell (100U) includes a positive electrode (200), a first separation film (400), a negative electrode (300), and a second separation film (500) that are sequentially stacked,
wherein the positive electrode (200) includes a positive electrode current collector (210) and a positive electrode mixture layer (220) formed on the positive electrode current collector (210), and
the negative electrode (300) includes a negative electrode current collector (310) and a negative electrode mixture layer (320) formed on the negative electrode current collector (310),
wherein a thickness of at least one of the positive electrode mixture layer (220) and the negative electrode mixture layer (320) is reduced when going to the center from the external side of the radial structure, and
wherein density of at least one of the positive electrode mixture layer (220) and the negative electrode mixture layer (320) increases when going to the center from the external side of the radial structure.

2. The electrode assembly (100) of claim 1, wherein
a positive electrode tab (211a, 211b, 211c) is formed on at least one of an upper edge, an external edge, and a center edge of the positive electrode current collector (210).

3. The electrode assembly (100) of claim 1, wherein
a negative electrode tab (311a, 311b, 311c) is formed on at least one of a lower edge, an external edge, and a center edge of the negative electrode current collector (310).

4. The electrode assembly (100) of claim 1, wherein
the positive electrode current collector (210), the positive electrode mixture layer (220), the first separation film (400), the negative electrode mixture layer (320), the negative electrode current collector (310), and the second separation film (500) are sequentially stacked.

5. The electrode assembly of claim 1, wherein
a through-hole (212, 312) is formed in the current collector (210, 310).

6. The electrode assembly (100) of claim 1, further comprising
an electrode lead (213, 313) bonded to the electrode tab (211a-c, 311a-c).

7. A secondary battery comprising:
an electrode assembly (100) according to Claim 1;
a battery case (600) for receiving the electrode assembly (100); and
a cap assembly (700) disposed on the electrode assembly (100),
wherein the electrode tab (211a, 311a) is connected to the cap assembly (700) or the battery case (600).

## Patentansprüche

1. Elektrodenanordnung (100), umfassend
eine Vielzahl von Einheitszellen (100U) zum Bilden einer radialen Struktur in Bezug auf eine Mitte,
wobei eine Dicke der Einheitszelle (100U) reduziert wird, während sie von einer Außenseite der radialen Struktur in Bezug auf einen horizontalen Querschnitt zur Mitte geht, und
eine Elektrodenlasche (211a, 311a) an mindestens einer von einer Oberkante, einer Unterkante, einer Außenkante und einer Mittelkante eines Stromabnehmers (210, 310), der in der Einheitszelle (100U) enthalten ist, gebildet ist,
**dadurch gekennzeichnet, dass**
die Einheitszelle (100U) eine positive Elektrode (200), einen ersten Trennfilm (400), eine negative Elektrode (300) und einen zweiten Trennfilm (500), die sequentiell gestapelt sind, enthält,
wobei die positive Elektrode (200) einen Stromabnehmer (210) der positiven Elektrode und eine Mischschicht (220) der positiven Elektrode, die auf dem Stromabnehmer (210) der positiven Elektrode gebildet ist, enthält, und
die negative Elektrode (300) einen Stromabnehmer (310) der negativen Elektrode und eine Mischschicht (320) der negativen Elektrode, die auf dem Stromabnehmer (310) der negativen Elektrode gebildet ist, enthält,
wobei eine Dicke von mindestens einer von der Mischschicht (220) der positiven Elektrode und der Mischschicht (320) der negativen Elektrode reduziert wird, wenn sie von der Außenseite der radialen Struktur zur Mitte geht, und
wobei die Dichte von mindestens einer von der Mischschicht (220) der positiven Elektrode und der Mischschicht (320) der negativen Elektrode zunimmt, wenn sie von der Außenseite der radialen Struktur zur Mitte geht.

2. Elektrodenanordnung (100) nach Anspruch 1, wobei
eine positive Elektrodenlasche (211a, 211b, 211c) an mindestens einer von einer Oberkante, einer Außenkante und einer Mittelkante des Stromabnehmers (210) der positiven Elektrode gebildet ist.

3. Elektrodenanordnung (100) nach Anspruch 1, wobei
eine negative Elektrodenlasche (311a, 311b, 311c) an mindestens einer von einer Unterkante, einer Außenkante und einer Mittelkante des Stromabnehmers (310) der negativen Elektrode gebildet ist.

4. Elektrodenanordnung (100) nach Anspruch 1, wobei
der Stromabnehmer (210) der positiven Elektrode, die Mischschicht (220) der positiven Elektrode, der erste Trennfilm (400), die Mischschicht (320) der negativen Elektrode, der Stromabnehmer (310) der negativen Elektrode und der zweite Trennfilm (500) sequentiell gestapelt sind.

5. Elektrodenanordnung nach Anspruch 1, wobei
ein Durchgangsloch (212, 312) in dem Stromabnehmer (210, 310) gebildet ist.

6. Elektrodenanordnung (100) nach Anspruch 1, ferner umfassend
eine Elektrodenleitung (213, 313), die mit der Elektrodenlasche (211a-c, 311a-c) verbunden ist.

7. Sekundärbatterie, umfassend:
eine Elektrodenanordnung (100) nach Anspruch 1;
ein Batteriegehäuse (600) zum Aufnehmen der Elektrodenanordnung (100); und
eine Kappenanordnung (700), die auf der Elektrodenanordnung (100) angeordnet ist,
wobei die Elektrodenlasche (211a, 311a) mit der Kappenanordnung (700) oder dem Batteriegehäuse (600) verbunden ist.

## Revendications

1. Ensemble électrode (100) comprenant
une pluralité de cellules unitaires (100U) pour former une structure radiale par rapport à un centre,
dans lequel une épaisseur de la cellule unitaire (100U) diminue en allant vers le centre depuis un côté externe de la structure radiale par rapport à la section transversale horizontale, et
une languette d'électrode (211a, 311a) est formée sur au moins un bord supérieur, un bord inférieur, un bord externe et un bord de centre d'un collecteur de courant (210, 310) inclus dans la cellule unitaire (100U),
**caractérisé en ce que**
la cellule unitaire (100U) inclut une électrode positive (200), un premier film de séparation (400), une électrode négative (300) et un deuxième film de séparation (500) qui sont empilés séquentiellement,
dans lequel l'électrode positive (200) inclut un collecteur de courant d'électrode positive (210) et une couche de mélange d'électrode positive (220) formée sur le collecteur de courant d'électrode positive (210), et
l'électrode négative (300) inclut un collecteur de courant d'électrode négative (310) et une couche de mélange d'électrode négative (320) formée sur le collecteur de courant d'électrode négative (310),
dans lequel une épaisseur de soit la couche de mélange d'électrode positive (220), soit la couche de mélange d'électrode négative (320) diminue en allant vers le centre depuis le côté externe de la structure radiale, et
dans lequel la densité de soit la couche de mélange d'électrode positive (220), soit la couche de mélange d'électrode négative (320) augmente en allant vers le centre depuis le côté externe de la structure radiale.

2. Ensemble électrode (100) selon la revendication 1, dans lequel
une languette d'électrode positive (211a, 211b, 211c) est formée sur au moins un bord supérieur, un bord externe et un bord de centre du collecteur de courant d'électrode positive (210).

3. Ensemble électrode (100) selon la revendication 1, dans lequel
une languette d'électrode négative (311a, 311b, 311c) est formée sur au moins un bord inférieur, un bord externe et un bord de centre du collecteur de courant d'électrode négative (310).

4. Ensemble électrode (100) selon la revendication 1, dans lequel
le collecteur de courant d'électrode positive (210), la couche de mélange d'électrode positive (220), le premier film de séparation (400), la couche de mélange d'électrode négative (320), le collecteur de courant d'électrode négative (310) et le deuxième film de séparation (500) sont empilés séquentiellement.

5. Ensemble électrode selon la revendication 1, dans lequel
un trou traversant (212, 312) est formé dans le collecteur de courant (210, 310).

6. Ensemble électrode (100) selon la revendication 1, comprenant en outre
un fil d'électrode (213, 313) relié à la languette d'électrode (211a-c, 311a-c).

7. Batterie rechargeable comprenant :
un ensemble électrode (100) selon la revendication 1 ;
un boîtier de batterie (600) pour recevoir l'ensemble électrode (100) ; et
un ensemble capuchon (700) disposé sur l'ensemble électrode (100),
dans lequel la languette d'électrode (211a, 311a) est reliée à l'ensemble capuchon (700) ou au boîtier de batterie (600).
